# EUROPÄISCHE PATENTSCHRIFT

(11) **EP 1 147 494 B1**
(45) Veröffentlichungstag und Bekanntmachung des Hinweises auf die Patenterteilung: **28.09.2005**
(21) Anmeldenummer: 00904929.7
(22) Anmeldetag: 18.01.2000
(51) Int. Cl.: G07C 9/00

(54) **VERFAHREN UND SYSTEM ZUR FÄLSCHUNGSSICHERUNG BEI BIOMETRISCHER PERSONENERKENNUNG**
METHOD AND SYSTEM FOR PREVENTING FRAUD IN THE BIOMETRIC DETECTION OF PERSONS
PROCEDE ET SYSTEME DE PROTECTION CONTRE LA FRAUDE EN CAS DE RECONNAISSANCE BIOMETRIQUE DE PERSONNES

(30) Priorität: 19.01.1999 DE 19901881
(43) Veröffentlichungstag der Anmeldung: 24.10.2001
(73) Patentinhaber: HumanScan AG, 6060 Sarnen (CH)
(72) Erfinder: FRISCHHOLZ, Robert, DCS Dialog Commun. Systems AG, D-91058 Erlangen (DE)
(74) Vertreter: Liesegang, Eva
(86) Internationale Anmeldenummer: PCT/EP2000/000367
(87) Internationale Veröffentlichungsnummer: WO 2000/043960

(56) Entgegenhaltungen:
- EP-A- 0 758 776
- DE-C- 4 413 788
- US-A- 4 841 575
- US-A- 5 483 601
- US-A- 5 719 951
- US-A- 5 774 591

## Beschreibung

Die Erfindung betrifft ein Verfahren und ein System zur Fälschungssicherung bei biometrischer Personenerkennung gemäß dem Oberbegriff von Patentanspruch 1 bzw. 11. Derartige Verfahren und Systeme sind bekannt aus der DE 44 13 788, US 4 841 575 und US 5 483 601.

Es gibt Verfahren und Systeme zur biometrischen Personenerkennung, die sich auf eine Kombination aus Gesichtserkennung und Lippenbewegungserkennung stützen. Ein solches Verfahren ist z.B. in der deutschen Patentanmeldung 198 47 261 derselben Anmelderin beschrieben, auf die Bezug genommen wird. Bei der Personenerkennung unterscheidet man zwischen der Identifikation einer Person unter vielen - d.h. der Beantwortung der Frage "Wer ist die Person?" - und der Verifikation einer Person - d.h. dem Vergleich der Personendaten mit einem bestimmten Datensatz oder der Beantwortung der Frage "Ist die Person diejenige, die sie vorgibt zu sein?". Die Erfindung betrifft den an zweiter Stelle genannten Fall.

Biometrische Personenerkennungsverfahren gelten als besonders zuverlässig, weil sie personenspezifische Merkmale verwenden. Jedoch ist die biometrische Personenerkennung nicht vollständig gegen Fälschungen sicher. Eine besondere Gefahr geht aus von sogenannten "Replay-Attacken", bei denen der biometrische Datensatz einer Person unberechtigt in ein System eingespielt wird, so daß das Erkennungssystem vermeintlich die biometrischen Daten einer Person erkennt und dieser beispielsweise Zutritt zu einem geschützten Bereich gewährt oder die Durchführung einer bestimmten Transaktion ermöglicht.

Aus dem Stand der Technik sind auch Methoden zur Absicherung der personenspezifischen Zugangsdaten bekannt. Bei diesen Sicherungsverfahren muß beachtet werden, daß ein grundlegender Unterschied zwischen der biometrischen Personenerkennung und anderen üblichen Schutzmechanismen, wie der Vergabe einer Geheimzahl oder eines Passwortes, besteht. Während nämlich dann, wenn eine Geheimzahl oder ein Passwort in falsche Hände gerät, ein Mißbrauch dadurch verhindert werden kann, daß diese gesperrt und neu vergeben werden, ist es praktisch unmöglich, eine neue biometrische Zugangskennung zu vergeben, weil diese naturgemäß personenspezifisch ist. Wenn z.B. der Datensatz eines Fingers bei einem Fingerabdrucksystem unrechtmäßig ausgespäht wird, kann dieses Merkmal einer Person nicht neu vergeben werden. Das gleiche gilt für ein Gesichtserkennungssystem, weil zum Erkennen einer bestimmten Person kein anderes Gesicht als das eben dieser Person verwendet werden kann.

Um solche Arten des Mißbrauchs abzuwehren, werden heute bereits bei der Aufnahme der biometrischen Personendaten bestimmte Sicherheitsmaßnahmen ergriffen. Diese sind z.B. darauf gerichtet festzustellen, ob sich wirklich die Person vor dem Aufnahmegerät befindet, die erfaßt werden soll, oder nur eine "Kopie", wie eine fotografische Abbildung. Im Falle der Gesichtserkennung kann z.B. bei der Aufnahme darauf geachtet werden, daß intrinsische Bewegungen innerhalb des Gesichts vorhanden sind, um den Gebrauch eines Fotos auszuschließen. Es ist offensichtlich, daß solche Sicherheitsmaßnahmen nicht unüberwindbar sind, weil zur "Überlistung" des Systems beispielsweise anstelle eines Fotos auch eine Videoaufnahme verwendet werden könnte.

Noch schwieriger ist der Schutz bereits aufgenommener biometrischer Personendaten. Wenn eine unberechtigte Person in den Besitz der aufgezeichneten Personendaten kommt, besteht nahezu keine Möglichkeit zu verhindern, daß diese die Personendaten mißbräuchlich in ein Zugangsdatennetz einspeist und dadurch Zugang zu dem System erlangt.

Es ist daher eine Aufgabe der vorliegenden Erfindung, ein neues Verfahren und ein System zur biometrischen Personenerkennung anzugeben, die einen besseren Schutz gegen Fälschungen bieten.

Diese Aufgabe wird durch ein Verfahren mit den Merkmalen von Anspruch 1 sowie durch ein System mit den Merkmalen von Anspruch 11 gelöst.

Es wird vor, während oder nach der Erfassung der Personendaten, die der biometrischen Personenerkennung dienen, die Person veranlaßt, eine bestimmte Bewegung auszuführen, und es wird überprüft, ob die Person diese Bewegung ausgeführt hat, bevor mit der Personenerkennung fortgefahren wird. Die Erfindung setzt somit ein interaktives Verfahren und System ein, um sicherzustellen, daß sich tatsächlich ein realer Benutzer, nämlich die Person, die z.B. Zutritt zu einem gesicherten Bereich erhalten möchte, vor dem Gerät befindet und nicht eine Kopie.

Bei einer ersten bevorzugten Ausführungsform der Erfindung wird hierfür mittels einer Videokamera die Augenposition und damit die Blickrichtung einer Person bestimmt. Es wird z.B. auf einem Bildschirm ein beliebiges Objekt vorgegeben, auf das die Person blicken soll, und durch Erfassen der Augenstellung kann erkannt werden, ob die Person tatsächlich in die vorgegebene Blickrichtung sieht. Durch Vorgeben mehrerer solcher zufällig positionierter Objekte und Überprüfen, ob sich die Blickrichtung der Person entsprechend den Objektpositionen ändert, kann sichergestellt werden, daß sich eine lebende Person vor dem Erkennungssystem befindet und nicht eine Kopie des biometrischen Datensatzes dieser Person eingespielt wird.

Bei einer alternativen Ausführungsform der Erfindung kann anstelle der Augenstellung auch die Position eines Fingers auf einem Digitalisiertablett oder dergleichen erfaßt werden. Hierzu kann auf dem Tablett an verschiedenen Stellen eine Markierung angezeigt und erfaßt werden, ob der Benutzer seinen Finger auf die verschiedenen Markierungspositionen legt.

Erst wenn die durch das System gesteuerten Bewegungen des Benutzers den vorgegebenen Positionen richtig folgen, werden die mittels Video oder anderer Erfassungsmittel aufgezeichneten biometrischen Daten (des Gesichtes, des Fingerabdrucks oder dergleichen) anhand gespeicherter Referenzdaten überprüft, um festzustellen, ob es sich bei dem Benutzer um eine autorisierte Person handelt.

Bei dem erfindungsgemäßen Verfahren und System ist es praktisch unmöglich, einen fertigen biometrischen Datensatz mißbräuchlich für eine "Replay-Attacke" einzusetzen. Durch die zufällige Vorgabe von Objekten, denen die Bewegung der Testperson folgen muß, kann die Überprüfung nur eine tatsächlich vorhandene Person bestehen. Vorzugsweise werden nacheinander mehrere Objekte an verschiedenen Positionen vorgegeben, um eine zufällige Übereinstimmung der Blickrichtung, Handposition oder dergleichen mit der Objektposition auszuschließen.

Die Erfindung ist im folgenden anhand bevorzugter Ausführungsformen mit Bezug auf die Zeichnung näher erläutert. In den Figuren zeigen:
- Fig. 1: ein Flußdiagramm einer bevorzugten Ausführungsform des erfindungsgemäßen Verfahrens; und
- Fig. 2: eine schematische Blockdiagrammdarstellung des erfindungsgemäßen Systems zur biometrischen Personenerkennung.

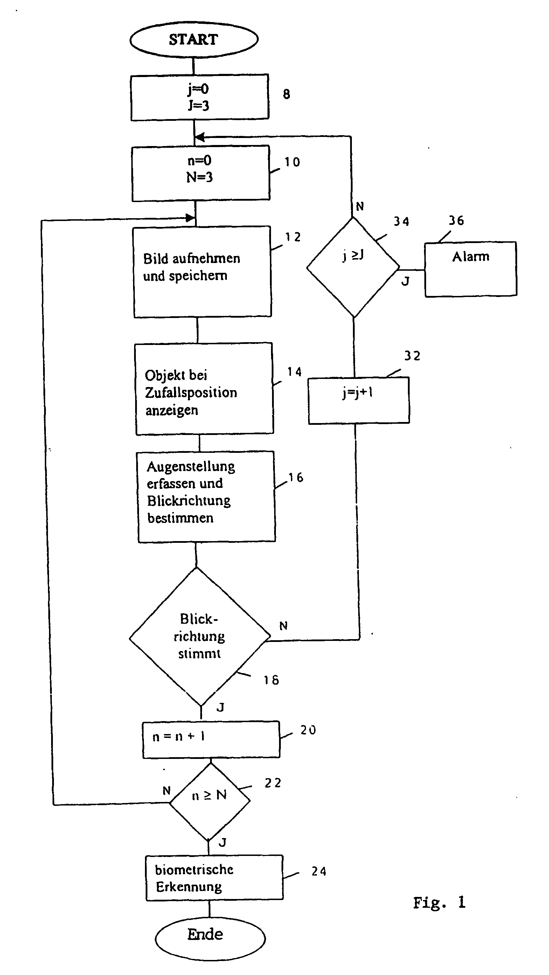

Fig. 1 zeigt eine bevorzugte Ausführungsform des erfindungsgemäßen Verfahrens.

In einem ersten Schritt 8 wird ein Fehlerzähler j auf 0 gesetzt, und die Anzahl J der zulässigen Fehlversuche wird z.B. auf 3 festgelegt. Im Schritt 10 wird ein Testiterationszähler n auf 0 gesetzt, und die Anzahl N der Testdurchläufe wird z.B. auf 3 gesetzt, wobei jede andere geeignete Zahl gewählt werden kann. Im Schritt 12 wird das Videobild einer Testperson aufgezeichnet und in digitaler Form abgespeichert. Dann wird im Schritt 14 auf einem Bildschirm an einer zufälligen Position ein Objekt angezeigt, und die Testperson wird aufgefordert, auf das Objekt zu blicken.

Im Schritt 16 wird das Augenpaar der Testperson erfaßt, d.h. mittels Video aufgezeichnet und in digitale Form umgewandelt, und die Blickrichtung wird bestimmt. Hierzu kann z.B. das in dem Patent DE 196 322 37 beschriebene Verfahren verwendet werden.

Im Schritt 18 wird überprüft, ob die Blickrichtung der Testperson zu dem auf dem Bildschirm angezeigten Objekt geht, wobei ein bestimmtes Zeitintervall vorgegeben werden kann, innerhalb dessen die Blickrichtung in der richtigen Richtung liegen muß. Falls sie dies nicht tut, geht der Verfahrensablauf zurück über die Schritte 32 und 34 zum Schritt 10, so daß der Iterationszähler n auf 0 gesetzt bleibt; der gesamte Erkennungsvorgang wird neu gestartet. Im Schritt 32 wird der Fehlerzähler um 1 erhöht, und im Schritt 34 wird geprüft, ob die Blickrichtung bereits J (=3) Mal nicht zu dem angezeigten Objekt gegangen ist. Wenn j<J, wird im Schritt 10 eine erneute Lenkung und Erfassung der Blickrichtung gestartet. Wenn jedoch bereits J (=3) Fehlversuche erfolgt sind, wird die Erkennungsschleife über eine Alarmstufe 36 verlassen. Eine Bedienungsperson oder ein Programm werden benachrichtigt, die dann geeignete Maßnahmen einleiten können.

Wenn andererseits die Blickrichtung zu dem auf dem Bildschirm angezeigten Objekt geht, wird im Schritt 20 der Iterationszähler n um 1 erhöht; n = n+1. Im Schritt 22 wird dann überprüft, ob der Iterationszähler n bereits die maximale Anzahl N (=3) der Durchläufe erreicht hat. Wenn dies nicht der Fall ist, geht der Ablauf zurück zum Schritt 12, wo erneut das Bild der Testperson aufgenommen und abgespeichert und dann in den Schritten 14 bis 18 die Blickrichtung überprüft wird. Bei diesem und jedem weiteren Durchlauf wird das Objekt jeweils bei einer anderen Position auf dem Bildschirm angezeigt.

Wenn die vorgegebene Anzahl der Testdurchläufe erfolgreich abgeschlossen wurde, d.h. wenn im vorliegenden Fall n = N = 3, ist die Sicherheitsüberprüfung positiv beendet, und das Verfahren fährt im Schritt 24 mit der biometrischen Erkennung fort, die beispielsweise wie in der Patentanmeldung DE 198 47 261 beschrieben ablaufen kann.

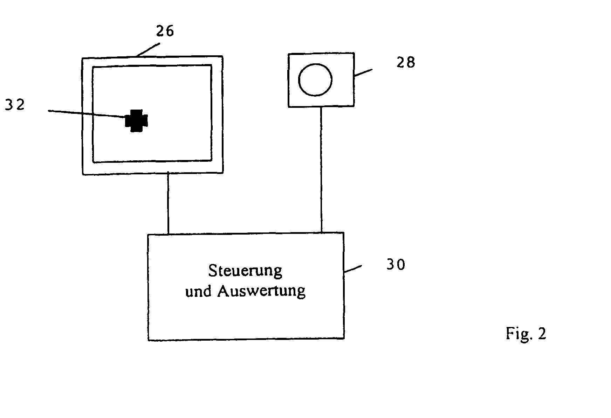

Fig. 2 zeigt eine sehr vereinfachte Darstellung des erfindungsgemäßen Systems zur Personenerkennung gemäß einer bevorzugten Ausführungsform mit seinen Grundelementen. Das System umfaßt einen Monitor 26, eine Kamera 28 und eine Steuer- und Auswerteeinheit 30. Auf dem Monitor 26 wird ein Objekt 32 bei einer willkürlich wählbaren Position angezeigt, um die Blickrichtung einer Testperson (nicht gezeigt) zu lenken. Mit der Kamera 28 kann ein Videobild der Testperson, und insbesondere das Gesicht der Testperson bzw. noch spezieller der Augen der Testperson aufgenommen werden, das digitalisiert und in der Steuer- und Auswerteeinheit 30 gemäß dem oben beschriebenen Verfahren verarbeitet wird.

Die Erfindung hat den großen Vorteil, daß sie mit Standardhardware, wie einem üblichen PC mit Monitor sowie einer Videokamera, realisierbar ist und daß sie keine Spezialumgebung benötigt. Durch Vorgeben einer größeren Anzahl von zufällig gewählten Objektpositionen auf dem Monitor kann ein beliebig hoher Grad an Sicherheit geschaffen werden.

Selbstverständlich sind, wie eingangs erwähnt, auch andere biometrische Erfassungsmethoden als die optische Abtastung einer Testperson möglich, z.B. die Aufnahme eines Fingerabdrucks bei verschiedenen, vorgebbaren Positionen auf einem Anzeige- und Erfassungsschirm mittels thermischer, kapazitiver oder anderer Verfahren.

Das erfindungsgemäße Verfahren und System kann in der Zukunft für die automatische und biometrische Zugangskontrolle verwendet werden. Eine vorgeschaltete, nachgeschaltete oder in den Erkennungsprozeß eingestreute Prozedur zur Überprüfung der Blickrichtung der Augen, der Position eines Fingers oder dergleichen stellt sicher, daß die Personenerkennung tatsächlich mit einer lebenden Person durchgeführt wird. Durch Vergleichen der dabei entstehenden Personendaten mit Referenzdaten wird sichergestellt, daß es sich um eine gewünschte bzw. autorisierte Person handelt.

Vorstehend wurden lediglich die Grundzüge der Erfindung erläutert, ohne auf die Einzelheiten der an sich bekannten Verfahren zur biometrischen Personenerkennung einzugehen. Solche sind z.B. in der in Bezug genommenen Patentanmeldung DE 198 47 261 oder auch in den darin genannten Veröffentlichungen beschrieben. Es liegt im Können des Durchschnittsfachmanns, ein für den jeweiligen Anwendungsfall geeignetes Personenerkennungsverfahren zu wählen.

## Patentansprüche

1. Verfahren zur Fälschungssicherung bei biometrischer Personenerkennung, bei der wenigstens ein biologisches Merkmal einer Person erfaßt und in Personendaten transformiert wird (12), um die Person zu erkennen (24), **dadurch gekennzeichnet, daß** vor, während oder nach der Erfassung der Personendaten, die der biometrischen Personenerkennung dienen, die Person veranlaßt (14) wird, eine bestimmte, zufällige Bewegung auszuführen, und überprüft wird, ob die Person diese Bewegung ausgeführt hat (16,18), um die Präsenz der realen Person sicherzustellen.

2. Verfahren nach Anspruch 1, **dadurch gekennzeichnet, daß** die Blickrichtung der Person gesteuert und die Augenstellung erfaßt wird.

3. Verfahren nach Anspruch 2, **dadurch gekennzeichnet, daß** auf einem Monitor wenigstens eine Markierung an einer willkürlichen Position vorgegeben und erfaßt wird, ob die Blickrichtung der Person auf diese Markierung geht.

4. Verfahren nach einem der vorangehenden Ansprüche, **dadurch gekennzeichnet**, daß die Person veranlaßt wird, eine Hand oder Teile davon bei einer vorgebbaren Position auf eine biometrische Erfassungseinrichtung zu legen und biometrische Daten der Hand bzw. deren Teile bei dieser Position erfaßt werden.

5. Verfahren nach einem der vorangehenden Ansprüche, **dadurch gekennzeichnet, daß** die Person veranlaßt wird, mehrmals hintereinander ähnliche Bewegungen auszuführen, die auf unterschiedliche, vorgebbare Positionen gerichtet sind.

6. Verfahren nach Anspruch 5, **dadurch gekennzeichnet, daß** eine erste Zielrichtung für die Bewegung vorgegeben und geprüft wird, ob eine erste Bewegung der vorgegebenen Zielrichtung folgt, und wenigstens eine weitere, von der ersten Zielrichtung abweichende Zielrichtung vorgegeben und geprüft wird, ob wenigstens eine zweite Bewegung dieser weiteren Zielrichtung folgt, und wenn wenigstens die erste und die zweite Bewegung den jeweiligen Zielrichtungen folgen, das biologische Merkmal der Person erfaßt wird.

7. Verfahren nach Anspruch 5 oder 6, **dadurch gekennzeichnet, daß** dann, wenn mehrmals hintereinander die Bewegungen nicht den Zielrichtungen folgen, ein Alarm ausgegeben wird.

8. Verfahren nach einem der vorangehenden Ansprüche, **dadurch gekennzeichnet, daß** ein Gesichtsbild der Person aufgenommen und digitalisiert wird, in dem digitalisierten Gesichtsbild die Ist-Augenstellung erfaßt und mit einer Soll-Augenstellung verglichen wird, und wenn die Ist-Augenstellung mit der Soll-Augenstellung weitgehend übereinstimmt, das digitalisierte Gesichtsbild mit wenigstens einem digitalen Referenz-Gesichtsbild verglichen wird.

9. Verfahren nach einem der vorangehenden Ansprüche, **dadurch gekennzeichnet, daß** das Bild eines Hand- oder Fingerabdrucks der Person aufgenommen und digitalisiert wird, die Ist-Position des Bildes in einem Erfassungsbereich ermittelt und mit einer Soll-Position verglichen wird, und wenn die Ist-Position mit der Soll-Position weitgehend übereinstimmt, das digitalisierte Bild mit wenigstens einem digitalen Referenzbild verglichen wird.

10. Verfahren nach einem der vorangehenden Ansprüche, **dadurch gekennzeichnet, daß** die Bewegung vor, nach oder während einer Personenerkennung der Person erfaßt wird.

11. System zur Fälschungssicherung bei biometrischer Personenerkennung mit Detektoreinrichtung (28) zum Erfassen wenigstens eines biologischen Merkmals einer Person und einer Verarbeitungseinrichtung (30) zum Transformieren des erfaßten Merkmals in Personendaten, **gekennzeichnet durch** eine Lenkeinrichtung (26), die vor, während oder nach der Erfassung der Personendaten, die der biometrischen Personenerkennung dienen,eine bestimmte zufällige Bewegung der Person veranlaßt, wobei das System eingerichtet ist, zu überprüfen, ob die Person diese Bewegung ausgeführt hat, um die Präsenz der realen Person sicher zu stellen.

12. System nach Anspruch 11, **dadurch gekennzeichnet, daß** die Lenkeinrichtung einen Monitor (26) aufweist, auf dem eine Markierung an willkürlichen Positionen darstellbar ist, um die Bewegung der Person auf diese Markierung zu richten.

13. System nach Anspruch 11 oder 12, **dadurch gekennzeichnet, daß** die Lenkeinrichtung (26) die Blickrichtung der Person steuert, die Detektoreinrichtung (28) die Augenstellung erfaßt, und die Verarbeitungseinrichtung (30) die erfaßte Augenstellung digitalisiert und mit einer Soll-Augenstellung vergleicht.

14. System nach Anspruch 11, **dadurch gekennzeichnet, daß** die Lenkeinrichtung Teil der Detektoreinrichtung ist.

15. System nach Anspruch 14, **dadurch gekennzeichnet, daß** die Detektoreinrichtung ein Digitalisiertablett aufweist, um die Handbewegung der Person zu steuern und die Handposition zu erfassen, und die Verarbeitungseinrichtung die erfaßte Handposition digitalisiert und mit einer Sollposition vergleicht.

16. System nach Anspruch 14 oder 15, **dadurch gekennzeichnet, daß** die Detektoreinrichtung einen Fingerabdruck der Person nur bei der Sollposition erfaßt.

17. Verfahren zur biometrischen Personenerkennung umfassend ein Verfahren nach einem der Ansprüche 1 - 10, **dadurch gekennzeichnet, daß** die Personendaten mit Referenzdaten verglichen werden.

18. Einrichtung zur biometrischen Personenerkennung umfassend ein System nach einem der Ansprüche 11- 16, **dadurch gekennzeichnet, daß** die Verarbeitungseinrichtung die Personendaten mit Referenzdaten vergleicht.

## Claims

1. A method of securing forgery in biometrical identification of persons which includes detecting at least one biological characteristic of a person and transforming (12) it into personal data in order to recognize (24) the person, **characterized in that** the person is caused (14) to carry out a specific random motion before, during or after detecting the personal data used for the biometrical identification of the person and it is verified whether the person has performed this motion (16, 18) to ascertain the presence of the real person.

2. The method as claimed in claim 1, **characterized in that** the line of sight of the person is controlled and the position of the eyes is detected.

3. The method as claimed in claim 2, **characterized in that** at least one mark is preset at a random position on a monitor, and it is detected whether the person's line of sight is directed to that mark.

4. The method as claimed in any one of the preceding claims, **characterized in that** the person is caused to place a hand or parts thereof at a predeterminable position on a biometrical detector means, and that biometrical data of the hand or parts thereof at this position are detected.

5. The method as claimed in any one of the preceding claims, **characterized in that** the person is caused to carry out similar motions repeatedly in succession, said motions being directed to different predeterminable positions.

6. The method as claimed in claim 5, **characterized in that** a first target direction is predetermined for the motion and it is checked whether a first motion follows the predetermined target direction, and at least one other target direction is predetermined which differs from the first target direction, and it is checked whether at least a second motion follows this other target direction, and the biological characteristic of the person is detected if at least the first and second motions follow the respective target directions.

7. The method as claimed in claim 5 or 6, **characterized in that** an alarm is given if the motions do not follow the target directions repeatedly in succession.

8. The method as claimed in any one of the preceding claims, **characterized in that** a facial picture is taken of the person and digitized, and the actual position of the eyes in the digitized image is detected and compared with a desired eye position, and the digitized facial image is compared with at least one digital facial reference image if the actual eye position largely corresponds with the desired eye position.

9. The method as claimed in any one of the preceding claims, **characterized in that** the picture of a hand print or finger print of the person is taken and digitized, the actual position of the picture in a detection area is determined and compared with a desired position, and the digitized image is compared with at least one digital reference image if the actual position largely corresponds with the desired position.

10. The method as claimed in any one of the preceding claims, **characterized in that** the motion is detected before, after, or during the identification of the person.

11. A system of securing forgery in biometrical identification of persons, comprising a detector means (28) for detecting at least one biological characteristic of a person and a processing means (30) for transforming the characteristic detected into personal data, **characterized by** a directing means (26) for releasing a certain random motion of the person before, during or after detecting the personal data used for the biometrical identification of the person; wherein the system is configured to verify whether the person has performed the motion to ascertain the presence of the real person.

12. The system as claimed in claim 11, **characterized in that** the directing means comprises a monitor (26) on which a mark is adapted to be displayed at random positions in order to direct the person's motion to that mark.

13. The system as claimed in claim 11 or 12, **characterized in that** the directing means (26) controls the person's line of sight, the detector means (28) detects the eye position, and the processing means (30) digitizes the eye position detected and compares it with the desired eye position.

14. The system as claimed in claim 11, **characterized in that** the directing means is part of the detector means.

15. The system as claimed in claim 14, **characterized in that** the detector means comprises a digitizing tray to control the person's hand motions and detect the position of the hand, and the processing means digitizes the hand position detected and compares it with a desired position.

16. The system as claimed in claim 14 or 15, **characterized in that** the detector means detects a fingerprint of the person at the desired position only.

17. A method of biometrical identification of persons, comprising a method as claimed in any one of claims 1 to 10, **characterized in that** the person's data are compared with reference data.

18. A means for biometrical identification of persons, comprising a system as claimed in any one of claims 11 to 16, **characterized in that** the processing means compares the person's data with reference data.

## Revendications

1. Procédé de protection contre la fraude en cas de reconnaissance biométrique des personnes, dans lequel au moins une caractéristique biologique d'une personne est saisie et transformée en données personnelles (12) pour reconnaître la personne (24), **caractérisé en ce que**, avant, pendant ou après la saisie des données personnelles qui servent à la reconnaissance biométrique des personnes, la personne est invitée (14) à exécuter un mouvement donné fortuit, et on vérifie si la personne a exécuté ce mouvement (16, 18) pour s'assurer de la présence de la personne réelle.

2. Procédé selon la revendication 1, **caractérisé en ce que** la direction du regard de la personne est commandée et la position des yeux est saisie.

3. Procédé selon la revendication 2, **caractérisé en ce qu'**au moins un repère dans une position arbitraire est prédéterminé sur un écran et on détecte si la direction du regard de la personne se pose sur ce repère.

4. Procédé selon l'une quelconque des revendications précédentes, **caractérisé en ce que** la personne est invitée, dans une position prédéterminable, à poser une main ou des parties de celle-ci sur un dispositif de saisie biométrique et des données biométriques de la main ou de ses parties sont saisies dans cette position.

5. Procédé selon l'une quelconque des revendications précédentes, **caractérisé en ce que** la personne est invitée à exécuter plusieurs fois une succession de mouvements similaires qui sont orientés vers des positions différentes prédéterminables.

6. Procédé selon la revendication 5, **caractérisé en ce qu'**une première direction-cible est prédéterminée pour le mouvement et on vérifie si un premier mouvement suit la direction-cible prédéterminée et au moins une autre direction-cible différente de la première direction-cible est prédéterminée et on vérifie si au moins un deuxième mouvement suit cette autre direction-cible, et si au moins le premier et le deuxième mouvement suivent les directions-cibles respectives, la caractéristique biologique de la personne est saisie.

7. Procédé selon la revendication 5 ou 6, **caractérisé en ce que**, lorsque les mouvements ne suivent pas les directions-cibles plusieurs fois successivement, une alarme est émise.

8. Procédé selon l'une quelconque des revendications précédentes, **caractérisé en ce qu'**une photo du visage de la personne est prise et numérisée, la position réelle des yeux est saisie dans la photo numérisée du visage et comparée avec une position théorique des yeux, et si la position réelle des yeux correspond sensiblement à la position théorique des yeux, la photo numérisée du visage est comparée avec au moins une photo de référence numérique du visage.

9. Procédé selon l'une quelconque .. des revendications précédentes, **caractérisé en ce que** la photo d'une empreinte d'une main ou d'une empreinte digitale de la personne est prise et numérisée, la position réelle de la photo est déterminée dans une zone de saisi et comparée avec une position théorique, et si la position réelle correspond sensiblement à la position théorique, la photo numérisée est comparée avec au moins une photo de référence numérique.

10. Procédé selon l'une quelconque des revendications précédentes, **caractérisé en ce que** le mouvement est saisi avant, après ou pendant une reconnaissance personnelle de la personne.

11. Système de protection contre la fraude en cas de reconnaissance biométrique des personnes avec un dispositif de détection (28) pour la saisie d'au moins une caractéristique biologique d'une personne et un dispositif de traitement (30) pour la transformation de la caractéristique saisie en données personnelles, **caractérisé par** un dispositif de guidage (26) qui avant, pendant ou après la saisie des données personnelles qui servent à la reconnaissance biométrique des personnes, provoque un mouvement donné fortuit de la personne, le système étant agencé de manière à vérifier si la personne a exécuté ce mouvement pour s'assurer de la présence de la personne réelle.

12. Système selon la revendication 11, **caractérisé en ce que** le dispositif de guidage comporte un écran (26) sur lequel un repère peut être représenté dans des positions arbitraires pour orienter le mouvement de la personne sur ce repère.

13. Système selon la revendication 11 ou 12, **caractérisé en ce que** le dispositif de guidage (26) commande la direction du regard de la personne, le dispositif de détection (28) saisit la position des yeux et le dispositif de traitement (30) numérise la position des yeux saisie et la compare avec une position théorique des yeux.

14. Système selon la revendication 11, **caractérisé en ce que** le dispositif de guidage fait partie du dispositif de détection.

15. Système selon la revendication 14, **caractérisé en ce que** le dispositif de détection comporte une tablette de numérisation pour commander le mouvement des mains de la personne et pour saisir la position des mains, et le dispositif de traitement numérise la position des mains saisie et la compare avec une position théorique.

16. Système selon la revendication 14 ou 15, **caractérisé en ce que** le dispositif de détection saisit une empreinte digitale de la personne seulement dans la position théorique.

17. Procédé de reconnaissance biométrique des personnes comprenant un procédé selon l'une quelconque des revendications 1 à 10, **caractérisé en ce que** les données personnelles sont comparées avec des données de référence.

18. Dispositif de reconnaissance biométrique des personnes comprenant un système selon l'une quelconque des revendications 11 à 16, **caractérisé en ce que** le dispositif de traitement compare les données personnelles avec des données de référence.
